Europäisches Patentamt

European Patent Office

Office européen des brevets

(19)

(11) Veröffentlichungsnummer: **0 209 138**
**B1**

(12) **EUROPÄISCHE PATENTSCHRIFT**

(45) Veröffentlichungstag der Patentschrift:
11.10.89

(51) Int. Cl.⁴: **F16B 19/02**

(21) Anmeldenummer: 86109831.7

(22) Anmeldetag: 17.07.86

(54) **Vorrichtung zur Durchsteckverschraubung.**

(30) Priorität: 18.07.85 DE 3525955

(43) Veröffentlichungstag der Anmeldung:
21.01.87 Patentblatt 87/4

(45) Bekanntmachung des Hinweises auf die Patenterteilung:
11.10.89 Patentblatt 89/41

(84) Benannte Vertragsstaaten:
AT CH DE FR GB IT LI SE

(56) Entgegenhaltungen:
DE-A- 1 942 259
FR-A- 1 371 781
FR-A- 2 071 545
FR-A- 2 231 875
US-A- 1 785 709
US-A- 4 076 430

SOVIET INVENTIONS ILLUSTRATED, Sektion Mechanik,
Woche D27, 12. August 1981, Zusammenfassungsnr.
G2610 Q61, Derwent Publications Ltd., London, GB; &
SU - A - 771 368 (YANKOVICH) 25.10.1980

(73) Patentinhaber: **Nixdorf Computer Aktiengesellschaft,
Fürstenallee 7, D-4790 Paderborn(DE)**

(72) Erfinder: **Le, Thanh-Son, Dipl.-Ing., Hauptstrasse 135,
D-1000 Berlin 62(DE)**

(74) Vertreter: **Schaumburg, Thoenes & Englaender,
Mauerkircherstrasse 31 Postfach 86 07 48,
D-8000 München 80(DE)**

ACTORUM AG

## Beschreibung

Die Erfindung betrifft eine Vorrichtung nach dem Oberbegriff des Anspruches 1 bzw. des Anspruches 8, wie sie beispielsweise durch die US-A 1 785 709 bekannt ist.

Vorrichtungen dieser Art ermöglichen das Verschrauben von Teilen mittels Schraube und Mutter von nur einer Seite her, so daß sie sich insbesondere zum Verschrauben solcher Anordnungen eignen, die von nur einer Seite her zugänglich sind. Zum Einsetzen der Vorrichtung werden der Schraubbolzen und die Durchsteckhülse relativ zueinander so eingestellt, daß das Halteelement nicht seitlich über die Durchsteckühlse übersteht und das Durchstecken behindert. Nach dem Durchstecken müssen Schraubbolzen und Durchsteckhülse gegeneinander verdreht werden, so daß das Halteelement außer Flucht mit der jeweiligen Bohrung kommt und damit die Anordnung verankert.

Die Vorrichtung gemäß der US-A 1 785 709 zeigt eine Anordnung insbesondere für die Durchsteckverschraubung zweier zu verbindender Teile. Dabei ist der Schraubbolzen mit Spiel in der Durchsteckhülse gelagert, so daß sich die beiden Teile der Anordnung sehr leicht axial und auch in Verdrehrichtung gegeneinander verstellen lassen. Die die Montage durchführende Person muß deshalb beim Durchstecken die beiden Teile sowohl axial als auch in Verdrehrichtung sichern, was insbesondere bei schwierigen Montagesituationen die Arbeit erheblich erschwert.

Es ist die Aufgabe der vorliegenden Erfindung, eine Vorrichtung der im Oberbegriff der Ansprüche 1 bzw. 8 genannten Art zu schaffen, die bei einfachem Aufbau leichter zu montieren ist.

Diese Aufgabe ist erfindungsgemäß durch Anordnungen gemäß dem Anspruch 1 bzw. dem Anspruch 8 gelöst.

Bei der im Anspruch 1 beschriebenen Anordnung sind die Durchsteckhülse und der Schraubbolzen in ihrer Durchsteckkonfiguration gegen gegenseitiges Verdrehen gesichert, so daß die die Montage durchführende Person den Schraubbolzen nur noch gegen eine axiale Verschiebung in der Durchsteckhülse halten muß, um sicherzustellen, daß die Anordnung ihre Durchsteckkonfiguration sicher beibehält. Vorteilhafte Ausgestaltungen sind Gegenstand der Unteransprüche 2 bis 7.

Bei der im Anspruch 8 beschriebenen Anordnung sind die Durchsteckhülse und der Schraubbolzen in ihrer Durchsteckkonfiguration gegen gegenseitige Längsverschiebung gesichert, so daß die die Montage durchführende Person den Schraubbolzen nur gegen eine Verdrehung gegenüber der Durchsteckhülse halten muß; eine unbeabsichtigte axiale Verstellung ist nicht möglich. Weitere vorteilhafte Ausgestaltungen dieser erfindungsgemäßen Lösung ergeben sich aus den Ansprüchen 9 bis 12.

Ausführungsbeispiele der Erfindung sind in den Zeichnungen dargestellt und werden im folgenden näher beschrieben:

Fig. 1 zeigt den Längsschnitt einer Durchsteckverschraubung im eingesteckten Zustand;

Fig. 2 zeigt den Schnitt a–a nach Fig. 1;

Fig. 3 zeigt den Längsschnitt der Druchsteckverschraubung im verspannten Zustand;

Fig. 4 zeigt eine Ansicht in Richtung b nach Fig. 3;

Fig. 5 zeigt die Vorderansicht eines Schraubbolzens;

Fig. 6 zeigt eine Draufsicht auf den Bolzen nach Fig. 5;

Fig. 7 zeigt den Längsschnitt einer Durchsteckhülse;

Fig. 8 zeigt die Draufsicht der Hülse nach Fig. 7;

Fig. 9 zeigt die Zuordnung einer Sperrnase zu einem Längsschlitz der Hülse.

Fig. 10 zeigt den Längsschnitt einer anderen Ausführung einer Durchsteckverschraubung in einem in Sackloch eingesteckten Zustand;

Fig. 11 zeigt den Schnitt d–d nach Fig. 10;

Fig. 12 zeigt den Längsschnitt der Durchsteckverschraubung nach Fig. 10 im verspannten Zustand;

Fig. 13 zeigt den Schnitt e–e nach Fig. 12.

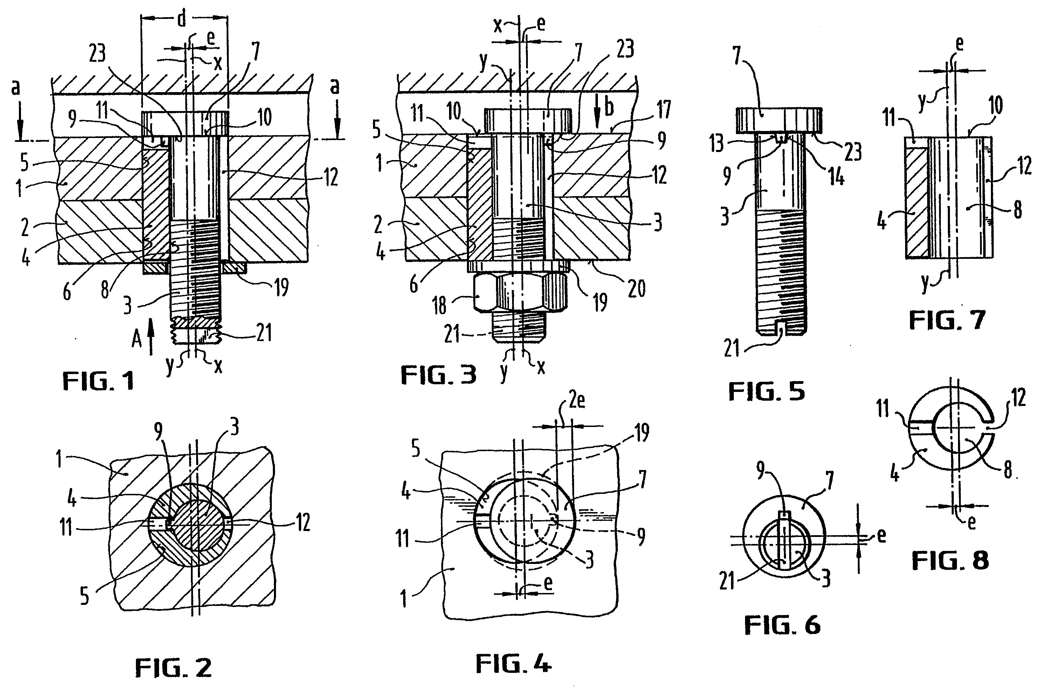

Bei dem Ausführungsbeispiel nach Fig. 1 werden zwei Teile 1 und 2 durch eine Durchsteckverschraubung miteinander verbunden, wobei das Anbringen der Verbindungselemente nur von einer zugänglichen Seite A der Verschraubungsstelle aus erfolgt.

In Fig. 1 ist der Längsschnitt der Durchsteckverschraubung im eingesteckten Zustand gezeigt, wobei ein Schraubbolzen bzw. Durchsteckschraube 3 kopfseitig gemeinsam mit einer Durchsteckhülse 4 in Durchsteckbohrungen 5 und 6 so durchgesteckt wird, daß der um ein Maß e exzentrisch zur Schraubenschaftsmittelachse x–x angeordnete zylindrische, als Halteelement 7 dienende Schraubenkopf gerade außerhalb der Durchgangsbohrung 5 liegt. Die Durchsteckschraube 3 liegt hierbei in einer Durchgangsbohrung 8 der Hülse 4, welche ebenfalls um ein Maß e exzentrisch zur Hülsenmittelachse y–y angeordnet ist. Der Durchmesser d des zylindrischen Halteelementes 7 ist gerade so groß gewählt, daß er durch die Durchsteckbohrungen 5 und 6 der Teile 1 und 2 durchgesteckt werden kann. Die Hülse 4 hat denselben Durchmesser d wie das Halteelement 7, so daß es im eingesteckten Zustand nur eine einzige Stellung gibt, wo das zylindrische Halteelement 7 mit der Hülse 4 so fluchtet, daß die Durchsteckschraube 3 kopfseitig gemeinsam mit der Hülse 4 durch die Durchsteckbohrungen 5 und 6 gesteckt werden kann. Diese Stellung wird stets durch den Formschluß zwischen einer an der Auflagefläche 23 des Halteelementes 7 vorgesehenen Sperrnase 9 (Fig. 2, 5, 6) und einer an der Stirnseite 10 auf der Einbauseite der Hülse 4 angebrachten durchgehenden Quernut 11 (Fig. 2, 4) aufrechterhalten. Auf die schmalste Seite der Hülse 4, also der Quernut 11 gegenüber, ist ein längs zur Hülsenmittelachse y–y verlaufender durchgehender Längsschlitz 12 (Fig. 7) angebracht, so daß die Hülse 4 dadurch auf einer Seite offen ist (Fig. 8).

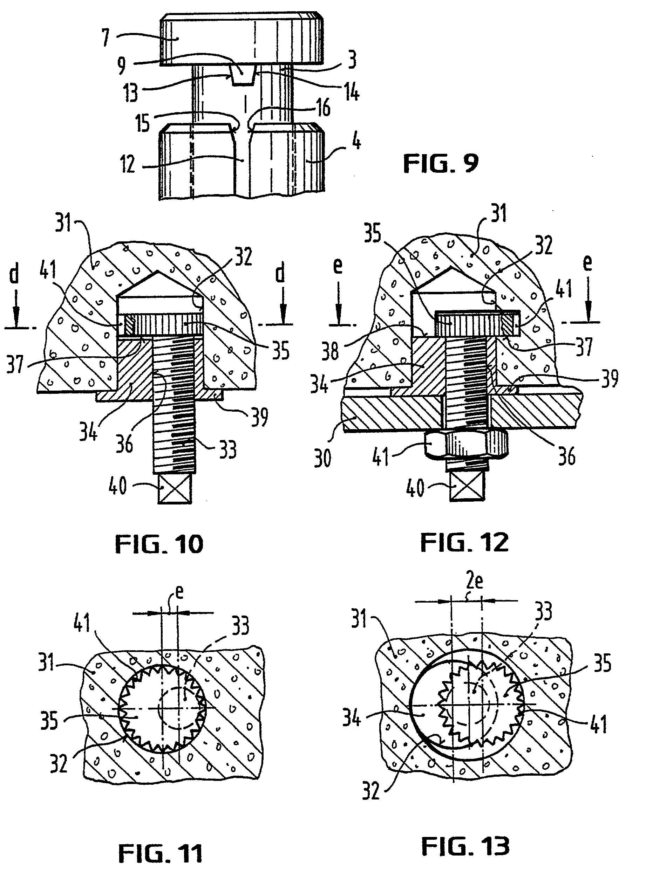

Nachdem das zylindrische Halteelement 7 bereits außerhalb der Durchsteckbohrung 5 liegt, wird die Durchsteckschraube 3 separat eingedrückt, so daß der Formschluß zwischen Sperrnase 9 und Quernut 11 dadurch aufgehoben wird und die Durchsteckschraube 3 nun relativ zur Hülse 4 gedreht werden kann. Die Durchsteckschraube 3 wird danach dann um 180° relativ zur Hülse 4 zur anderen Seite gedreht, so daß, wenn die Durchsteckschraube 3 herausgezogen wird, die Sperrnase 9 mit den beiden schrägen Seitenflanken 13 und 14 zwischen den beiden schrägen Flächen 15 und 16 (Fig. 9) des Schlitzes 12 formschlüssig andrückend einliegt (Fig. 3). Durch die 180°-Drehung und infolge der Exzentrizität übergreift das zylindrische Halteelement 7 den Rand der Durchsteckbohrung 5 und liegt mit der Auflagefläche 23 auf der Oberfläche 17 des Teiles 1. Die Kontaktfläche zwischen Halteelement 7 und verspanntem Teil 1 ist nun sichelförmig und hat eine breiteste Stelle in der Mitte mit einem Maß 2e (Fig. 4). Diese Kontaktfläche wird stets durch den Formschluß zwischen Sperrnase 9 und dem Längsschlitz 12 aufrechterhalten, auch wenn die Hülse 4 sich um ihre eigene Achse dreht. In diesem Zustand kann eine Mutter 18 aufgeschraubt und fest angezogen werden, nachdem eine Unterlegscheibe 19 eingelegt worden ist.

Die Hülsenlänge ist so gewählt, daß die Hülse 4 kürzer als der Abstand zwischen den beiden Oberflächen 17 und 20 ist, so daß ein flächiges gegenseitiges Aufliegen der verspannten Teile 1 und 2 gewährleistet ist.

Die schrägen Seitenflanken 13 und 14 sind so gewählt, daß die Sperrnase 9 über die beiden schrägen Flächen 15 und 16 den Schlitz 12 auseinanderdrückt und daß Selbsthemmung erreicht wird. Die Hülse 4 wird dabei gespreizt und liegt verspannt und spielfrei in den Durchsteckbohrungen 5 und 6, so daß die beiden verspannten Teile 1 und 2, insbesondere wenn ein Drehmoment von einem zum anderen Teil zu übertragen ist, in Verdrehrichtung noch miteinander formschlüssig spielfrei verbunden sind. Die Hülse 4 übt nun die Funktion eines Paßbolzens aus, der aber keine axialen Sicherungselemente benötigt und sich einfach demontieren läßt.

Vorteile der so konstruierten Durchsteckverschraubung bestehen unter anderem darin, daß bei dynamischen Beanspruchungen unterworfenen verspannten Teilen die Durchsteckschrauben nicht direkt durch insbesondere senkrecht zur Schraubenachse wirkende Kräfte beansprucht werden, so daß das gefürchtete Kippen im Gewinde zwischen Schraube und Mutter, also eine der Ursachen für das selbsttätige Lösen der Schraubenverbindungen, verhindert wird. Auch die Scherbeanspruchung der Durchsteckschrauben wird durch die über die gesamte Länge durchgehenden Hülsen wesentlich vermindert.

Am Schraubenende ist eine senkrecht zur Schraubenachse durchgehende Nut 21 angebracht, die nicht nur darauf hinweist, in welcher Richtung das zylindrische Halteelement 7 liegt, sondern auch zum Drehen der Durchsteckschraube 3 mit einem Schraubendreher dienen kann.

Beim Lösen der Durchsteckverschraubung kann die Mutter 18 entweder ganz herausgenommen oder nur so herausgeschraubt werden, daß der Formschluß zwischen Sperrnase 9 und Längsschlitz 12 in Schraubenachsenrichtung aufgehoben wird, so daß das Halteelement 7 zur Ausgangsstellung zurückgedreht werden kann. Danach kann dann die Durchsteckschraube 3 gemeinsam mit der Hülse 4, der Unterlegscheibe 19 und der Mutter 18 herausgenommen werden. Da die Mutter 18 nicht ganz abgeschraubt werden muß, kann die Nut 21 am Schraubenende so auseinandergespreizt werden, daß der Gewindeteil am Schraubenende so verformt wird, daß die Mutter 18 nicht mehr herausgenommen werden kann. Auf diese Weise wird die Mutter 18 gegen Verlieren gesichert und die Durchsteckschraube 3 bildet dann mit der Hülse 4, der Unterlegscheibe 19 und Mutter 18 eine Einheit, die als ganzes ein- bzw. ausgebaut werden kann.

Bei dem Ausführungsbeispiel nach Fig. 10 bis 13 wird ein Teil 30 an eine Wand 31 eines Mauerwerks mit einer Durchsteckverschraubung fest angeschraubt (Fig. 12).

Da die Wand 31 relativ dick ist, enthält sie als Durchsteckbohrung eine als Sackloch ausgebildete Bohrung 32.

Fig. 10 zeigt eine Durchsteckschraube 33 gemeinsam mit einer Hülse 34 in der Bohrung 32 im eingesteckten Zustand. Die Durchsteckschraube 33 hat ein um ein Maß e exzentrisch zur Schraubenschaftsmittelachse angeordnetes und am Umfang mit gehärteten Schneidzähnen 41 (Fig. 11, 13) versehenes zylindrisches Halteelement 35. Die Hülse 34 hat ein zum Gewinde der Durchsteckschraube 33 passendes Innengewinde 36; die Durchgangsordnung 36 liegt ebenfalls, um ein Maß e exzentrisch zur Hülsenmittelachse und in diese ist die Durchsteckschraube 33 eingeschraubt, und zwar so, daß ihre Auflagenfläche 37 dicht an der Stirnfläche 38 auf der Einbauseite der Hülse 34 anliegt und die Lage des Halteelementes 35 zur Hülse 34 so ist, daß die Durchsteckschraube 33 kopfseitig gemeinsam mit der Hülse 34 in die Bohrung 32 eingesteckt werden kann (Fig. 10, 11).

Am Hülsenumfang innerhalb der Bohrung 32 sind Zähne bzw. Rändelungen angebracht, so daß die Hülse 34 erst durch Einschlagen in das Sackloch 32 greiffest getrieben wird, bis ihr Bund 39 zum Anschlag kommt (Fig. 10). Nun wird die Durchsteckschraube 33 über einen am Schraubenende angebrachten Vierkantzapfen 40 – von der Schraubenkopfseite aus gesehen – eingeschraubt, so daß die Schneidzähne 41 in dem Material des Mauerwerks bei einer 180°-Drehung den Raum für das zylindrische Halteelement 35 in der Bohrung 32 herausfräsen (Fig. 13). Dabei liegt die Auflagefläche 37 des Halteelementes 35 auf der Stirnfläche 38 der Hülse 34 (Fig. 12).

Nun kann der zu verspannende Teil 30 angebracht werden. Danach kann die Mutter 41 aufgeschraubt und fest angezogen werden, wobei die Durchsteckschraube 33 über den Vierkantzapfen 40 (Fig. 10, 12) festgehalten wird.

Auf diese Weise wird eine Durchsteckverschraubung in einem Sackloch realisiert. Durch das exzentrische, als Schraubenkopf ausgebildete Halteelement 35 ist die Hülse 34 nicht nur reibschlüssig, sondern auch noch formschlüssig in Schraubenachsenrichtung mit der Wand 31 verbunden, so daß die Schraubverbindung außerordentlich sicher ist.

Aus der vorstehenden Beschreibung geht hervor, daß das jeweilige Halteelement 7 bzw. 35 die Funktion einer Verankerung hat, die asymmetrisch zur Schraubbolzenmittelachse angeordnet ist. Dieses Halteelement muß nicht unbedingt scheiben- bzw. kopfförmig ausgebildet sein, sondern kann auch z.B. stabförmig sein, so daß sich ein insgesamt hakenförmiger Schraubbolzen ergibt, ähnlich den Schnittdarstellungen in den Fig. 1, 3, 10 und 12.

**Patentansprüche**

1. Vorrichtung zur Durchsteckverschraubung miteinander zu verbindender Teile (1, 2), in denen miteinander fluchtende Durchsteckbohrungen (5, 6) vorgesehen sind, mit einem Schraubbolzen (3), der exzentrisch in einer vorzugsweise ihrer dünnsten Stelle längsgeschlitzten Durchsteckhülse (4) angeordnet ist, deren Außendurchmesser dem Innendurchmesser der Durchsteckbohrungen (5, 6) entspricht, und mit einem am Ende des Schraubbolzens (3) quer und asymmetrisch zur Schraubbolzenmittelachse vorgesehenen, gegenüber der Schraubbolzendicke breiteren Halteelement (7), dessen Breite höchstens dem Innendurchmesser der Durchsteckbohrungen (5, 6) und dessen Asymmetrie in Richtung dieser Breite der Exzentrizität (e) des Schraubbolzens (3) in der Durchsteckhülse entspricht, dadurch gekennzeichnet, daß die Durchsteckhülse (4) an einem Ende eine Quernut (11) und der Schraubbolzen (3) eine in diese passende Sperrnase (9) aufweist, die der Quernut (11) frontal gegenübersteht, wenn das Halteelement (7) und die Durchsteckhülse (4) durch Drehen des Schraubbolzens (3) konzentrisch liegen.

2. Vorrichtung nach Anspruch 1, dadurch gekennzeichnet, daß der Längsschlitz (12) und die Quernut (11) diametral einander gegenüber liegen.

3. Vorrichtung nach dem Anspruch 1 oder 2, dadurch gekennzeichnet, daß die Sperrnase (9) zur Durchsteckhülse (4) hin konvergierend ausgebildet ist.

4. Vorrichtung nach Anspruch 3, dadurch gekennzeichnet, daß die Sperrnase (9) schräg zu einer Durchmesserebene des Schraubbolzens (3) liegende Seitenflanken (13, 14) hat.

5. Vorrichtung nach Anspruch 4, dadurch gekennzeichnet, daß der Längsschlitz (12) der Durchsteckhülse (4) an seinem der Sperrnase (9) zugewandten Ende zur Sperrnase (9) hin divergierend ausgebildet ist.

6. Vorrichtung nach einem der vorhergehenden Ansprüche, dadurch gekennzeichnet, daß der Schraubbolzen (3) an seinem dem Halteelement (7) abgewandten Ende einen Querschlitz (21) aufweist.

7. Vorrichtung nach einem der vorhergehenden Ansprüche, dadurch gekennzeichnet, daß das Halteelement (7) als Scheibe mit einem dem Innenprofil der Durchsteckbohrungen (5, 6) entsprechenden Umfangsprofil ausgebildet ist.

8. Vorrichtung zur Verschraubung miteinander zu verbindender Teile (30, 31), in denen jeweils eine Bohrung vorgesehen ist, mit einem Schraubbolzen (33), der exzentrisch in einer Durchsteckhülse (34) angeordnet ist, deren Außendurchmesser dem Innendurchmesser einer (32) der Bohrungen entspricht, und mit einem am Ende des Schraubbolzens (33) quer und asymmetrisch zur Schraubbolzenmittelachse vorgesehenen, gegenüber der Schraubbolzendicke breiteren Halteelement (35), dessen Breite höchstens dem Innendurchmesser dieser Bohrung (32) und dessen Asymmetrie in Richtung dieser Breite der Exzentrität (e) des Schraubbolzens (33) in der Durchsteckhülse (34) entspricht, dadurch gekennzeichnet, daß die Durchsteckhülse (34) ein Innengewinde (36) für den Schraubbolzen (33) aufweist.

9. Vorrichtung nach Anspruch 8, dadurch gekennzeichnet, daß die Durchsteckhülse (34) an ihrem dem Halteelement (35) abgewandten Ende einen Bund (39) hat.

10. Vorrichtung nach Anspruch 8 oder 9, dadurch gekennzeichnet, daß das Halteelement (35) an seinem äußersten Ende Schneidezähne (41) trägt.

11. Vorrichtung nach Anspruch 8, 9 oder 10, dadurch gekennzeichnet, daß die Durchsteckhülse (34) an ihrem Außenumfang gerändelt, kerbverzahnt oder mit Gewinde versehen ist.

12. Vorrichtung nach einem der Ansprüche 8 bis 11, dadurch gekennzeichnet, daß der Schraubbolzen (33) an seinem dem Halteelement (35) abgewandten Ende ein Werkzeugeingriffsprofil (40) hat.

**Claims**

1. A device for a through bolt connection of parts (1, 2) to be joined having aligned through bores (5, 6), including a screw bolt (3) being disposed eccentrically in a passage sleeve (4) which is lengthwise slit preferably at its thinnest area, the outer peripheral diameter of which corresponds to the inner diameter of the through bores (5, 6), further including a holding element (7) which is disposed transversely and asymetrically relative to the screw bolt center axis at one end of the screw bolt (3), and which has a cross sectional dimension greater than the thickness of the screw bolt, the width of said holding element maximally corresponding to the inner diameter of the through bores (5, 6) and the asymmetry of which in the direction of said width corresponding to the eccentricity (e) of the screw bolt (3) in the passage sleeve, characterized in that the passage sleeve (4) has at one end a transverse groove (11) and that the screw bolt (3) has a locking lug (9) adapted to fit into said groove, said lug being frontally opposite the transverse groove (11) when the holding element (7) and the passage sleeve (4) are concentrically aligned by rotation of the screw bolt (3).

2. A device according to claim 1, characterized in that the longitudinal slot (12) and the transverse groove (11) are diametrically arranged with each other.

3. A device according to claim 1 or 2, characterized in that the locking lug (9) is shaped convergently in the direction towards the passage sleeve (4).

4. A device according to claim 3, characterized in that the locking lug (9) has side flanks (13, 14) which are inclined relative to a diametrical plane of the screw bolt (3).

5. A device according to claim 4, characterized in that the longitudinal slot (12) of the passage sleeve (4) at its end facing the locking lug (9) is shaped divergently in the direction towards the locking lug (9).

6. A device according to any one of the foregoing claims, characterized in that the screw bolt (3) includes a transverse groove (21) at its end turned away from the holding element (7).

7. A device according to any one of the foregoing claims, characterized in that the holding element (7) is disc-shaped and has a peripheral profile corresponding to the inner profile of the through bores (5, 6).

8. A device for a bolt connection of parts (30, 31) to be joined each having a bore, including a screw bolt (33) being disposed eccentrically in a passage sleeve (34) the outer peripheral diameter of which corresponds to the inner diameter of one (32) of the bores, further including a holding element (35) which is located transversely and asymetrically relative to the screw bolt center axis at one end of the screw bolt (33) having a width greater than the thickness of the screw bolt, the width of said holding element maximally corresponding to the inner diameter of said bore (32) and the asymmetry of the same in the direction of said width corresponding to the eccentricity (e) of the screw bolt in the passage sleeve (34), characterized in that the passage sleeve (34) includes an inner thread (36) for the screw bolt (33).

9. A device according to claim 8, characterized in that the passage sleeve (34) has a collar (39) at its end which is turned away from the holding element (35).

10. A device according to claim 8 or 9, characterized in that the holding element (35) includes cutting teeth (41) along its outer periphery.

11. A device according to claim 8, 9 or 10, characterized in that the passage sleeve (34) at its outer periphery is knurled, notch toothed or threaded.

12. A device according to any one of claim 8 to 11, characterized in that the screw bolt (33) includes a tool engaging profile (40) at its end turned away from the holding element (35).

**Revendications**

1. Dispositif pour assembler l'une à l'autre par vissage traversant des pièces (1, 2) dans lesquelles sont prévus des trous traversants (5, 6) en prolongement exact l'un de l'autre, avec un boulon fileté (3) qui est disposé excentriquement dans une douille traversante (4) fendue en sens longitudinal de préférence dans sa zone la plus mince, dont le diamètre extérieur correspond au diamètre intérieur des trous traversants (5, 6), et avec un élément d'arrêt (7) prévu à l'extrémité du boulon fileté (3), transversalement et asymétriquement par rapport à l'axe général de ce boulon fileté, de largeur supérieure à l'épaisseur du boulon fileté et au plus égale au diamètre intérieur des trous traversants (5, 6) et dont l'asymétrie dans la direction de cette largeur correspond à l'excentration (e) du boulon fileté (3) dans la douille traversante, caractérisé en ce que la douille traversante (4) présente à une extrémité une rainure transversale (11) et le boulon fileté (3) un talon de blocage (9) entrant dans cette rainure (11) et qui se trouve opposé frontalement à cette dernière quand, par suite de la rotation du boulon fileté (3), l'élément d'arrêt (7) et la douille traversante (4) sont placés concentriquement.

2. Dispositif selon la revendication 1, caractérisé en ce que la fente longitudinale (12) et la rainure transversale (11) sont diamétralement opposées l'une à l'autre.

3. Dispositif selon la revendication 1 ou 2, caractérisé en ce que le talon de blocage (9) a une configuration à faces opposées convergentes en direction de la douille traversante (4).

4. Dispositif selon la revendication 3, caractérisé en ce que le talon de blocage (9) possède des flancs latéraux (13, 14) disposés obliquement par rapport à un plan diamétral du boulon fileté (3).

5. Dispositif selon la revendication 4, caractérisé en ce que la fente longitudinale (12) de la douille traversante (4) présente à son extrémité tournée vers le talon de blocage (9) une configuration à faces opposées divergentes en direction du talon de blocage (9).

6. Dispositif selon une quelconque des revendications précédentes, caractérisé en ce que le boulon fileté (3) présente à son extrémité éloignée de l'élément d'arrêt (7) une fente transversale (21).

7. Dispositif selon une quelconque des revendications précédentes, caractérisé en ce que l'élément d'arrêt (7) est un disque dont le profil périphérique correspond au profil intérieur des trous traversants (5, 6).

8. Dispositif pour assembler l'une à l'autre par vissage des pièces (30, 31) dans chacune desquelles est prévu un trou, avec un boulon fileté (33) qui est disposé excentriquement dans une douille traversante (34) dont le diamètre extérieur correspond au diamètre intérieur de l'un (32) des trous, et avec un élément d'arrêt (35) prévu à l'extrémité du boulon fileté (33) transversalement et asymétriquement par rapport à l'axe général de ce boulon fileté, de largeur supérieure à l'épaisseur du boulon fileté et au plus égale au diamètre intérieur de ce trou (32), et dont l'asymétrie dans la direction de cette largeur correspond à l'excentration (e) du boulon fileté (33) dans la douille traversante (34), caractérisé en ce que la douille traversante (34) comporte un filetage intérieur (36) pour le boulon fileté (33).

9. Dispositif selon la revendication 8, caractérisé en ce que la douille traversante (34) a à son extrémité éloignée de l'élément d'arrêt (35) une collerette (39).

10. Dispositif selon la revendication 8 ou 9, caractérisé en ce que l'élément d'arrêt (35) porte à son extrémité la plus extérieure des dents coupantes (41).

11. Dispositif selon une des revendications 8, 9 ou 10, caractérisé en ce que la douille traversante (34) est moletée, cannelée ou filetée à sa périphérie extérieure.

12. Dispositif selon une quelconque des revendications 8 à 11, caractérisé en ce que le boulon fileté

(33) a à son extrémité éloignée de l'élément d'arrêt (35) un profil (40) de coopération avec un outil.

EP 0 209 138 B1

FIG. 1

FIG. 2

FIG. 3

FIG. 4

FIG. 5

FIG. 6

FIG. 7

FIG. 8

**FIG. 9**

**FIG. 10**

**FIG. 12**

**FIG. 11**

**FIG. 13**